# EUROPÄISCHE PATENTSCHRIFT

(11) **EP 1 434 706 B1**
(45) Veröffentlichungstag und Bekanntmachung des Hinweises auf die Patenterteilung: **24.08.2005**
(21) Anmeldenummer: 02779107.8
(22) Anmeldetag: 18.09.2002
(51) Int. Cl.: B60R 25/04

(54) **ZÜNDSCHLOSS**
IGNITION LOCK
SERRURE DE CONTACT

(30) Priorität: 13.10.2001 DE 10150708
(43) Veröffentlichungstag der Anmeldung: 07.07.2004
(73) Patentinhaber: Delphi Technologies Inc., Troy, MI 48007 (US)
(72) Erfinder: RUDOLPH, Gerd, 55459 Aspisheim (DE); BESIER, Holger, 65375 Oestrich-Winkel (DE)
(74) Vertreter: Becker, Bernd
(86) Internationale Anmeldenummer: PCT/DE2002/003479
(87) Internationale Veröffentlichungsnummer: WO 2003/033315

(56) Entgegenhaltungen:
- DE-A- 10 107 992
- DE-A- 19 943 999
- US-A- 5 036 687

## Beschreibung

Die Erfindung bezieht sich auf ein Zündschloss, insbesondere für ein Kraftfahrzeug, mit einem Zündanlassschalter, der mit einer Aufnahme für einen Schließzylinder gekoppelt ist wobei in die Aufnahme entweder der Schließzylinder oder ein schlüsselloser Betätigungszylinder einsetzbar ist.

Aus der DE 199 21 889 A1 ist ein Zündschloss für ein Kraftfahrzeug mit einer mittels eines elektronischen Schlüssels bewegbaren Schlüsselaufnahme bekannt. Der Schlüsselaufnahme ist ein Sperrmittel zugeordnet, das zur Blockierung der Bewegung der Schlüsselaufnahme in Eingriff mit der Schlüsselaufnahme sowie zur Freigabe der Bewegung der Schlüsselaufnahme außer Eingriff mit der Schlüsselaufnahme bringbar ist. Das Sperrmittel ist nach der Auswertung eines zwischen dem Schlüssel und dem Zündschloss ausgetauschten elektronischen Codes mittels eines Aktors zur Freigabe betätigbar. Dem Zündschloss ist eine Verriegelungseinrichtung für eine Lenksäule zugeordnet, bei der ein bewegbares Sperrglied in einer ersten Position im blockierenden Eingriff mit der Lenksäule bringbar ist und in einer zweiten Position außer Eingriff mit der Lenksäule steht. Ein beim Entfernen des Schlüssels aus der Schlüsselaufnahme betätigbares Sicherungsmittel ist dem Sperrglied derart zugeordnet, dass in der zweiten Position eine Rückbewegung des Sperrgliedes in die erste Position bei unbetätigtem Sicherungsmittel verhindert ist. Der Aktor dient zusätzlich zur Betätigung des Sicherungsmittels, wobei eine Ansteuerung des Aktors zur Betätigung des Sicherungsmittels lediglich dann möglich ist, wenn der Schlüssel aus der Schlüsselaufnahme entfernt und das Kraftfahrzeug im Stillstand ist. Dieses Zündschloss weist einen sehr komplexen Aufbau auf.

Bei einem aus der Praxis bekannten Kraftfahrzeug dient ein elektronischer Code, den ein Berechtigter in Form einer sogenannten kontaktlosen Smart-Card bei sich trägt, zur Betätigung einer Schließeinrichtung des Kraftfahrzeuges, die die Kraftfahrzeugtüren in Abhängigkeit von der Berechtigung ver- und entriegelt. Im Weiteren wird in Abhängigkeit von der Berechtigung eine Wegfahrsperre aktiviert. Bei diesem Kraftfahrzeug ist ein Schlüssel im Wesentlichen zur Betätigung einer Lenksäulenverriegelung vorgesehen, während zum Anlassen des Kraftfahrzeuges ein Drucktastenschalter dient.

Die DE 101 07 992 A1 offenbart ein Zündschlosssystem für ein Kraftfahrzeug mit einem elektronischen Schlüssel. Das Zündschlosssystem umfasst ein eine bewegbare Handhabe aufweisendes elektronisches Zündschloss. Der elektronische Schlüssel ist in eine Aufnahme im Zündschloss einsteckbar, wobei der Schlüssel alternativ auch als eine Art Schlüsselattrappe ausgebildet sein kann, die ebenfalls in eine Aufnahme in einem Rotor des Zündschlosses eingesteckt ist. Darüber hinaus ist es möglich, anstelle der Schlüsselattrappe eine Drehhandhabe direkt an dem Rotor zu befestigen.

Des Weiteren ist aus der DE 199 43 999 A1 ein elektronisches Zündschloss mit einer als Stellglied ausgebildeten Schlüsselaufnahme bekannt, das durch einen in die Schlüsselaufnahme eingesteckten Schlüssel zum Durchführen vorbestimmter Schaltvorgänge zu betätigen ist. Das Zündschloss umfasst eine mechanisch auf einen in die Schlüsselaufnahme eingesteckten Schlüssel wirkende Abzugssicherung und ein durch einen in die Schlüsselaufnahme eingesteckten Schlüssel bewegbares Betätigungsglied zum Betätigen eines elektrischen Schalters.

Ferner zeigt die US-A-5 036 687 ein Lenkrad-Verriegelungssystem für ein Kraftfahrzeug, das einen schlüssellosen Zündanlassschalter umfasst.

Es ist Aufgabe der Erfindung, ein Zündschloss der eingangs genannten Art zu schaffen, das vielseitig verwendbar und kostengünstig aufgebaut ist.

Erfindungsgemäß wird die Aufgabe dadurch gelöst, dass der Betätigungszylinder einen umfangsseitig schwenkbar gelagerten Kopfschieber aufweist, der zum einen ein Betätigungselement verschiebbar in dem Betätigungszylinder hält und zum anderen den Betätigungszylinder in der Aufnahme fixiert.

Aufgrund dieser Maßnahme ist eine Verwendung des Zündschlosses mit dem zugeordneten Zündanlassschalter zum einen in Verbindung mit dem Schließzylinder zur Aufnahme eines Zündschlüssels und zum anderen mit dem schlüssellosen Betätigungszylinder sichergestellt. Die Ausstattung des Zündschlosses erfolgt in Abhängigkeit von der Verwendung, wobei das Zündschloss mit dem Zündanlassschalter in großen Stückzahlen relativ kostengünstig herstellbar ist. Im Weiteren kann auch die mechanische Funktion der Lenksäulenver- und Lenksäulenentriegelung mittels des Zündschlosses beibehalten werden. Das Verschieben des Betätigungselementes erfüllt die gleichen Funktionen wie bei einem bekannten Zündschloss das Abziehen und das Einstecken des Zündschlüssels.

Zweckmäßigerweise ist an den Kopfschieber eine mit einer Öffnung des Betätigungselementes zusammenwirkende Nase angeformt. Wenn die Nase des Kopfschiebers in die Öffnung des Betätigungselementes eingreift, ist ein Entfernen des Betätigungselementes aus dem Betätigungszylinder nicht möglich.

Um die beiden Endlagen des Betätigungselementes, die der abgezogen und der eingesteckten Position des bekannten Zündschlüssels entsprechen, für einen Benutzer taktil erfassbar zu machen, ist vorteilhafterweise in dem Betätigungszylinder ein federbelasteter Schieber gelagert, der mit einer Rastkurve des Betätigungselementes zusammenwirkt.

Vorzugsweise ist in den Schieber eine zum Querschnitt des Betätigungselementes korrespondierende Ausnehmung eingelassen, die das Betätigungselement durchragt. Das Betätigungselement ist somit in der Ausnehmung des Schiebers geführt.

Damit der Schieber stets auf der Rastkurve des Betätigungselementes gleitet und somit einen Widerstand gegen die Verschiebung des Betätigungselementes bewirkt, wirkt bevorzugt auf den Schieber eine Blattfeder ein, die in einer längsseitigen Nut auf dem äußeren Umfang des Betätigungszylinders gehalten ist.

Zur Erzielung eines relativ einfachen Aufbaus weist zweckmäßigerweise das Betätigungselement einen im Querschnitt im Wesentlichen rechteckförmigen Finger auf, der in den Betätigungszylinder hineinragt und an seinem freien Ende ein Griffstück trägt.

Damit der Zündanlassschalter sowie die mit dem Zündanlassschalter gekoppelten elektrischen Einrichtungen nicht permanent Energie verbrauchen, schließt vorteilhafterweise das Betätigungselement in seiner eingeschobenen Endlage einen Strompfad des Zündanlassschalters und ist in Abhängigkeit von der Berechtigung zur Betätigung des Zündanlassschalters mit dem Betätigungszylinder drehbar. Dadurch, dass das Betätigungselement mit dem Betätigungszylinder nur in seiner eingeschobenen Endlage drehbar ist, ist ein bewusstes Handeln des Benutzers des Zündschlosses erforderlich und eine versehentliche Beaufschlagung des Zündanlassschalters nahezu ausgeschlossen. Zweckmäßigerweise erfolgt nach dem Schließen des Strompfades die Abfrage der Berechtigung zur Betätigung des Zündanlassschalters durch einen Bordcomputer.

Nach einer vorteilhaften Ausgestaltung der Erfindung trägt zur Abfrage der Berechtigung zur Betätigung des Zündanlassschalters ein Benutzer des Zündschlosses ein Elektronikmodul mit sich, das ein Signal drahtlos an einen mit dem Bordcomputer gekoppelten Empfänger übermittelt, wobei der Bordcomputer bei einer Berechtigung die Freigabe einer drehbaren Aufnahme des Betätigungszylinders zur Verdrehung bewirkt. Das Elektronikmodul kann beispielsweise eine kontaktlose Smart-Card sein, deren Daten von dem als Lesegerät gestalteten Empfänger ausgelesen werden.

Vorteilhafterweise bewirkt der Bordcomputer zur Freigabe der drehbaren Aufnahme des Betätigungszylinders die Spannungsversorgung eines federbelasteten Klappankerrelais, dessen Klappanker außer Eingriff mit der Aufnahme gelangt. Somit ist es nicht erforderlich, das Klappankerrelais permanent mit Spannung zu versorgen, dies geschieht lediglich dann, wenn eine Freigabe zur Verdrehung der Aufnahme des Betätigungszylinders erfolgt ist. Falls keine Freigabe zur Verdrehung vorliegt, verhindert der federbelastete Klappanker die Verdrehung aufgrund der wirkenden Federspannung.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:
- Fig.1: eine Explosionsdarstellung eines erfindungsgemäßen Zündschlosses ohne einen Betätigungs- bzw. Schließzylinder,
- Fig.2: eine perspektivische Darstellung eines Betätigungszylinders für ein Zündschloss nach Fig. 1,
- Fig.3: eine weitere perspektivische Darstellung des Betätigungszylinders nach Fig. 2,
- Fig.4: eine Explosionsdarstellung des Betätigungszylinders nach Fig. 2 und

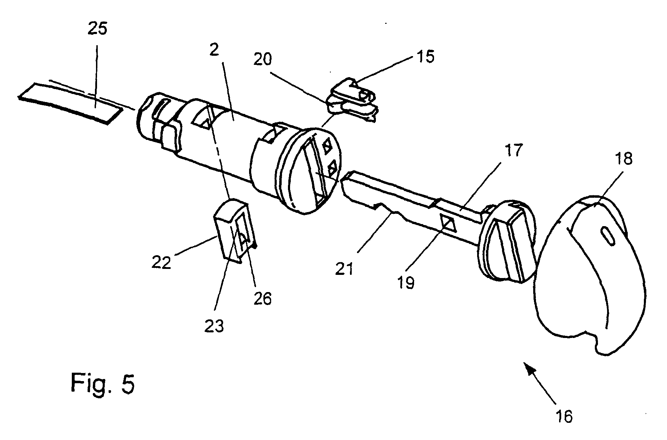

- Fig.5: eine weitere Explosionsdarstellung des Betätigungszylinders nach Fig. 2.

Das Zündschloss umfasst eine Aufnahme 1 für einen schlüssellosen Betätigungszylinder 2, der zum einen mit einer Einrichtung 3 zur Verriegelung einer nicht dargestellten Lenksäuleeines Kraftfahrzeuges und zum anderen mit einem Zündanlassschalter 4 gekoppelt ist.

Der Zündanlassschalter 4 weist ein Gehäuse 5 zur Aufnahme eines Stanzgitters auf, dessen Anschlusskontakte 6 in einen Steckerkragen 7 münden. In dem Gehäuse 5 ist ein Drehschaltglied 8 gelagert, das mit dem Stanzgitter zusammenwirkt. Im Weiteren ist im Zentrum des Drehschaltgliedes 8 ein vertikal verschiebbarer Betätiger 9 angeordnet. Das Gehäuse 5 ist mit einem mit dem Stanzgitter verbundenen Klappankerrelais 10 versehen, dessen Klappanker 11 mit einer nicht dargestellten Aufnahme für einen Zapfen 12 des Betätigungszylinders 2 zusammenwirkt. Das Gehäuse 5 des Zündanlassschalters 4 ist mittels eines Deckels 13 verschlossen, der bereichsweise von einem Metallbügel 14 überspannt ist.

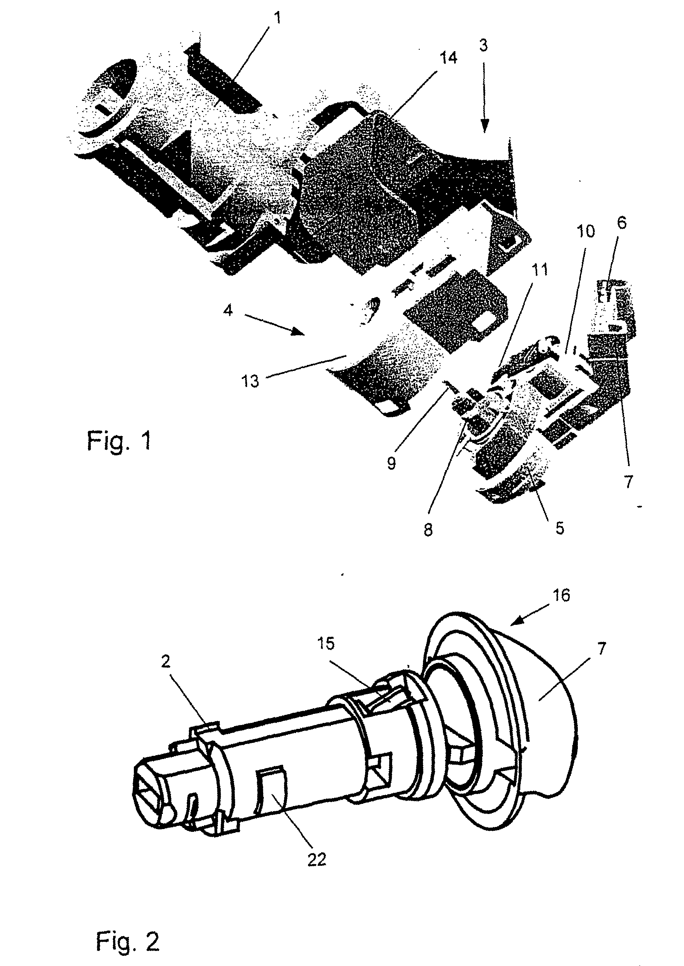

Der Betätigungszylinder 2 weist umfangsseitig einen schwenkbar gelagerten Kopfschieber 15 auf, der zum einen ein Betätigungselement 16 verschiebbar in dem Betätigungszylinder 2 hält und zum anderen den Betätigungszylinder 2 in der Aufnahme 1 fixiert. Das Betätigungselement 16 umfasst einen im Querschnitt im Wesentlichen rechteckförmigen Finger 17, der in den Betätigungszylinder 2 hineinragt und an seinem freien Ende ein Griffstück 18 trägt. Der Finger 17 des Betätigungselementes 16 ist mit einer Öffnung 19 versehen, in die eine Nase 20 des Kopfschiebers 15 eingreift. Des Weiteren ist in den Finger 17 des Betätigungselementes 2 eine Rastkurve 21 eingearbeitet, die mit einem in dem Betätigungszylinder 2 gelagerten Schieber 22 zusammenwirkt. In den Schieber 22 ist eine zum Querschnitt des Fingers 17 des Betätigungselementes 2 korrespondierende Ausnehmung 23 eingelassen. Eine in einer längsseitigen Nut 24 gehaltene Blattfeder 25 beaufschlagt den Schieber 22 derart, dass eine Fläche 26 der Ausnehmung 23 stets an der Rastkurve 21 des Betätigungselementes 16 anliegt und in einer ausgeschobenen Endlage (Fig. 2) hält.

In der Ausgangsposition des Betätigungszylinders 2 befindet sich das Betätigungselement 16 in einer ausgeschobenen Endlage, die einem abgezogenen Zündschlüssel bei einem Zündschloss mit Schließzylinder entspricht. In dieser Ausgangsposition ist die Lenksäule verriegelt und der Klappanker 11 des nicht mit Spannung beaufschlagten Klappankerrelais 10 liegt in einer korrespondierenden Nut der Aufnahme des Betätigungszylinders 2 ein, wodurch eine Verdrehung des Betätigungselementes 16 mit dem Betätigungszylinder 2 verhindert ist.

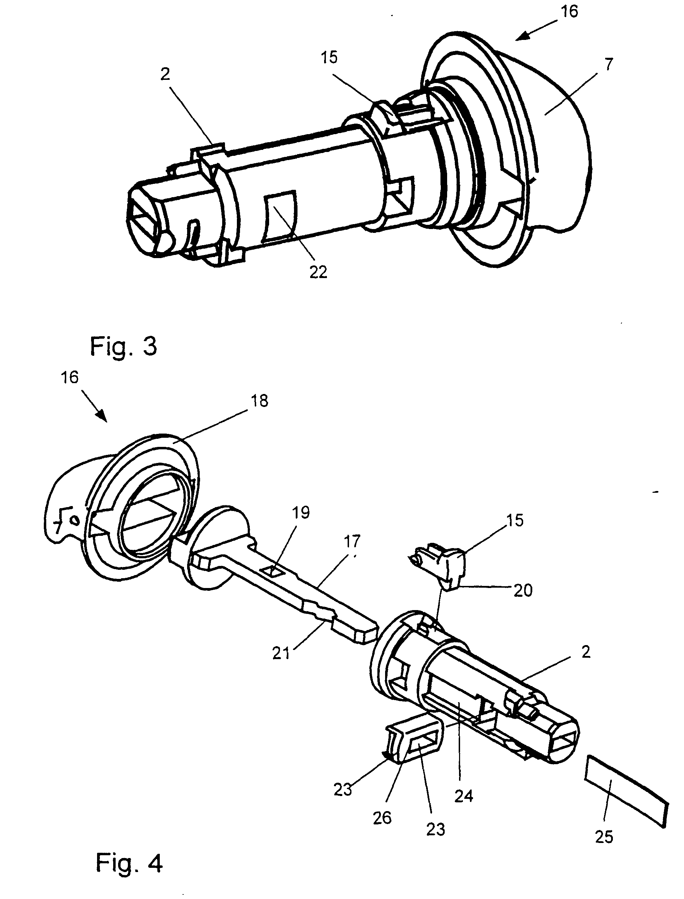

Ein Benutzer, der ein Elektronikmodul zur Identifizierung bei sich trägt, schiebt das Betätigungselement 16 entgegen der Wirkung des federbelasteten Schiebers 22 in den Betätigungszylinder 2 bis das Betätigungselement 16 seine eingeschobene Endlage erreicht (Fig. 3), in der es durch eine Beaufschlagung des Betätigers 9 des Zündanlassschalters 4 einen Strompfad des Stanzgitters schließt, wonach durch einen nicht dargestellten Empfänger ein Signal des Elektronikmoduls empfangen und durch den Bordcomputer ausgewertet wird. Falls der Benutzer als ein nicht berechtigter Benutzer erkannt wird, bleibt die Verdrehung des Betätigungselementes 16 mit dem Betätigungszylinder 2 blockiert. Falls der Benutzer als berechtigter Benutzer identifiziert wird, zieht das Klappankerrelais 10 seinen Klappanker 11 aus der Aufnahme zurück und das Betätigungselement 16 mit dem Betätigungszylinder 2 kann verdreht werden, wobei der Betätigungszylinder 2 zur Beaufschlagung des Zündanlassschalters 4 mit dessen Drehschaltglied 8 zusammenwirkt.

## Patentansprüche

1. Zündschloss, insbesondere für ein Kraftfahrzeug, mit einem Betätigungszylinder und einem Zündanlassschalter (4), der mit einer Aufnahme (1) für einen Schließzylinder gekoppelt ist, wobei in die Aufnahme (1) entweder der Schließzylinder oder der schlüssellose Betätigungszylinder (2) einsetzbar ist, **dadurch gekennzeichnet, dass** der Betätigungszylinder (2) einen umfangsseitig schwenkbar gelagerten Kopfschieber (15) aufweist, der zum einen ein Betätigungselement (16) verschiebbar in dem Betätigungszylinder (2) hält und zum anderen den Betätigungszylinder (2) in der Aufnahme (1) fixiert.

2. Zündschloss nach Anspruch 1, **dadurch gekennzeichnet, dass** an den Kopfschieber (15) eine mit einer Öffnung (19) des Betätigungselementes (16) zusammenwirkende Nase (20) angeformt ist.

3. Zündschloss nach Anspruch 1 oder 2, **dadurch gekennzeichnet, dass** in dem Betätigungszylinder (2) ein federbelasteter Schieber (22) gelagert ist, der mit einer Rastkurve (21) des Betätigungselementes (16) zusammenwirkt.

4. Zündschloss nach Anspruch 3, **dadurch gekennzeichnet, dass** in den Schieber (22) eine zum Querschnitt des Betätigungselementes (16) korrespondierende Ausnehmung (23) eingelassen ist, die das Betätigungselement (16) durchragt.

5. Zündschloss nach Anspruch 3 oder 4, **dadurch gekennzeichnet, dass** auf den Schieber (22) eine Blattfeder (25) einwirkt, die in einer längsseitigen Nut (24) auf dem äußeren Umfang des Betätigungszylinders (2) gehalten ist.

6. Zündschloss nach einem der Ansprüche 1 bis 5, **dadurch gekennzeichnet, dass** das Betätigungselement (16) einen im Querschnitt im Wesentlichen rechteckförmigen Finger (17) aufweist, der in den Betätigungszylinder (2) hineinragt und an seinem freien Ende ein Griffstück (18) trägt.

7. Zündschloss nach einem der Ansprüche 1 bis 6, **dadurch gekennzeichnet, dass** das Betätigungselement (16) in seiner eingeschobenen Endlage einen Strompfad des Zündanlassschalters (4) schließt und in Abhängigkeit von der Berechtigung zur Betätigung des Zündanlassschalters (4) mit dem Betätigungszylinder (2) drehbar ist.

8. Zündschloss nach Anspruch 7, **dadurch gekennzeichnet, dass** nach dem Schließen des Strompfades die Abfrage der Berechtigung zur Betätigung des Zündanlassschalters (4) durch einen Bordcomputer erfolgt.

9. Zündschloss nach einem der Ansprüche 1 bis 8, **dadurch gekennzeichnet, dass** zur Abfrage der Berechtigung zur Betätigung des Zündanlassschalters (4) ein Benutzer des Zündschlosses ein Elektronikmodul mit sich trägt, das ein Signal drahtlos an einen mit dem Bordcomputer gekoppelten Empfänger übermittelt, wobei der Bordcomputer bei einer Berechtigung die Freigabe einer drehbaren Aufnahme des Betätigungszylinders (2) zur Verdrehung bewirkt.

10. Zündschloss nach einem der Ansprüche 7 bis 9, **dadurch gekennzeichnet , dass** der Bordcomputer zur Freigabe der drehbaren Aufnahme des Betätigungszylinders (2) die Spannungsversorgung eines federbelasteten Klappankerrelais (10) bewirkt, dessen Klappanker (11) außer Eingriff mit der Aufnahme gelangt.

## Claims

1. Ignition lock, in particular for a motor vehicle, with an actuating cylinder and an ignition starter switch (4) which is coupled to a receptacle (1) for a lock cylinder, wherein either the lock cylinder or the keyless actuating cylinder (2) can be inserted in the receptacle (1), **characterised in that** the actuating cylinder (2) has a head slide (15) which is mounted so as to be pivotable on the circumferential side and which firstly holds an actuating element (16) slidably in the actuating cylinder (2) and secondly fixes the actuating cylinder (2) in the receptacle (1).

2. Ignition lock according to claim 1, **characterised in that** a lug (20) cooperating with an opening (19) of the actuating element (16) is formed integrally on the head slide (15).

3. Ignition lock according to claim 1 or 2, **characterised in that** in the actuating cylinder (2) is mounted a spring-loaded slide (22) which cooperates with a latch curve (21) of the actuating element (16).

4. Ignition lock according to claim 3, **characterised in that** in the slide (22) is formed a recess (23) which corresponds to the cross-section of the actuating element (16) and which extends through the actuating element (16).

5. Ignition lock according to claim 3 or 4, **characterised in that** a leaf spring (25) which is held in a groove (24) in the longitudinal side on the outer circumference of the actuating cylinder (2) acts on the slide (22).

6. Ignition lock according to any of claims 1 to 5, **characterised in that** the actuating element (16) has a finger (17) of substantially rectangular cross-section which extends into the actuating cylinder (2) and carries at its free end a gripping piece (18).

7. Ignition lock according to any of claims 1 to 6, **characterised in that** the actuating element (16) in its inserted end position closes a current path of the ignition starter switch (4) and is rotatable with the actuating cylinder (2) as a function of authorisation to actuate the ignition starter switch (4).

8. Ignition lock according to claim 7, **characterised in that**, after closing of the current path, scanning for authorisation to actuate the ignition starter switch (4) is effected by a vehicle computer.

9. Ignition lock according to any of claims 1 to 8, **characterised in that**, to scan for authorisation to actuate the ignition starter switch (4), a user of the ignition lock carries with him an electronic module which transmits a signal wirelessly to a receiver coupled to the vehicle computer, wherein in case of authorisation the vehicle computer causes the release of a rotatable receptacle of the actuating cylinder (2) for rotation.

10. Ignition lock according to any of claims 7 to 9, **characterised in that**, for release of the rotatable receptacle of the actuating cylinder (2), the vehicle computer causes voltage supply to a spring-loaded cutout blade relay (10) of which the cutout blade (11) becomes disengaged from the receptacle.

## Revendications

1. Serrure de contact, en particulier pour un véhicule, avec un cylindre d'actionnement et un contacteur d'allumage et de démarrage (4) qui est couplé à un logement (1) pour un cylindre de fermeture, dans le logement (1) pouvant être inséré soit le cylindre de fermeture soit le cylindre d'actionnement sans clé (2), **caractérisée en ce que** le cylindre d'actionnement (2) comporte un poussoir de tête (15) qui est monté à pivotement sur sa périphérie et qui, d'une part, maintient un élément d'actionnement (16) de manière coulissante dans le cylindre d'actionnement (2) et, d'autre part, immobilise le cylindre d'actionnement (2) dans le logement (1).

2. Serrure de contact selon la revendication 1, **caractérisée en ce que** sur le poussoir de tête (15) est surmoulé un ergot (20) coopérant avec une ouverture (19) de l'élément d'actionnement (16).

3. Serrure de contact selon la revendication 1 ou 2, **caractérisée en ce que** dans le cylindre d'actionnement (2) est logé un poussoir sollicité élastiquement (22) qui coopère avec une courbe de crantage (21) de l'élément d'actionnement (16).

4. Serrure de contact selon la revendication 3, **caractérisée en ce que** dans le poussoir (22) est ménagé un évidement (23) qui correspond à la section transversale de l'élément d'actionnement (16) et que traverse l'élément d'actionnement (16).

5. Serrure de contact selon la revendication 3 ou 4, **caractérisée en ce que** sur le poussoir (22) agit un ressort à lame (25) qui est maintenu dans une rainure longitudinale (24) sur la périphérie extérieure du cylindre d'actionnement (2).

6. Serrure de contact selon l'une des revendications 1 à 5, **caractérisée en ce que** l'élément d'actionnement (16) comporte un doigt à section transversale sensiblement rectangulaire (17) qui pénètre dans le cylindre d'actionnement (2) et porte une pièce de préhension (18) à son extrémité libre.

7. Serrure de contact selon l'une des revendications 1 à 6, **caractérisée en ce que**, dans sa position extrême enfoncée, l'élément d'actionnement (16) ferme un chemin de courant du contacteur d'allumage et de démarrage (4) et peut tourner avec le cylindre d'actionnement (2) en fonction de l'autorisation à actionner le contacteur d'allumage et de démarrage (4).

8. Serrure de contact selon la revendication 7, **caractérisée en ce que**, après la fermeture du chemin de courant, l'interrogation de l'autorisation à actionner le contacteur d'allumage et de démarrage (4) est effectuée par l'intermédiaire d'un ordinateur de bord.

9. Serrure de contact selon l'une des revendications 1 à 8, **caractérisée en ce que**, pour l'interrogation de l'autorisation à actionner le contacteur d'allumage et de démarrage (4), un utilisateur de la serrure de contact porte sur lui un module électronique qui transmet un signal sans fil à un récepteur couplé à l'ordinateur de bord, l'ordinateur de bord procédant, en cas d'autorisation n, à la libération d'un logement rotatif du cylindre d'actionnement (2) en vue de la rotation.

10. Serrure de contact selon l'une des revendications 7 à 9, **caractérisée en ce que** l'ordinateur de bord procède, pour libérer le logement rotatif du cylindre d'actionnement (2), à l'alimentation en tension d'un relais à armature mobile (10) sollicité élastiquement dont l'armature mobile (11) est dégagée du logement.
